# EUROPÄISCHE PATENTANMELDUNG

(11) **EP 1 037 078 A1**
(43) Veröffentlichungstag der Anmeldung: **20.09.2000**
(21) Anmeldenummer: 99810198.4
(22) Anmeldetag: 08.03.1999
(51) Int. Cl.: G02B 6/38

(54) **Schutzelement zum Abdecken der Lichtaustrittsfläche an einem optischen Bauteil, insbesondere an einem optischen Stecker**

(71) Anmelder: Diamond SA, 6616 Losone (CH)
(72) Erfinder: Volpi, Franco, 6652 Tegna (CH)
(74) Vertreter: Wenger, René

(57) **Zusammenfassung**

Das Schutzelement, beispielsweise die Schutzklappe (4) an einem optischen Steckerteil (1) besteht aus einem Kunststoffmaterial, das mit einem die Lichtstrahlung absorbierenden schwarzen Füllstoff angereichert ist. Dabei kann es sich beispielsweise um Kohlenstofffasern handeln. Ein derartiges Schutzelement bildet eine zuverlässige Sperre gegen austretendes Licht, die sich etwa gleich verhält, wie ein Schutzelement ähnlicher Dimension aus Metall.

## Beschreibung

Die Erfindung betrifft ein Schutzelement zum Abdecken der Lichtaustrittsfläche an einem optischen Bauteil, insbesondere an einem optischen Stecker, gemäss dem Oberbegriff von Anspruch 1. Die Elemente haben einerseits die Aufgabe, die Austrittsfläche, also beispielsweise die Stirnseite eines Steckerstifts, vor mechanischen Einwirkungen und vor Staub und Schmutz zu schützen. Eine andere wichtige Funktion besteht aber auch noch darin, bei einem aktivierten optischen Bauteil den Lichtaustritt zu verhindern. So könnten beispielsweise energiereiche Laserstrahlen die ungeschützte Netzhaut des menschlichen Auges schädigen.

In der Praxis sind verschiedene Arten von Schutzelementen bekannt. Durch die DE-A-44 25 821 oder durch die EP-A-770 892 sind Schutzkappen aus Kunststoffmaterial bekannt geworden, welche auf die Stirnseite eines optischen Steckers aufgesetzt werden können und welche nicht bzw. nur lose mit dem Steckergehäuse verbunden sind. Bei einer zweiten Kategorie von Schutzelementen handelt es sich um Schutzklappen, welche einen Bestandteil des Steckergehäuses bilden und welche beim Steckvorgang automatisch von einer Schliessstellung in eine Öffnungsstellung gebracht werden. Ein typisches Schutzelement dieser Gattung ist beispielsweise in der EP-A-823 649 dargestellt und beschrieben.

Ein Nachteil der bekannten Schutzelemente aus Kunststoffmaterial besteht darin, dass die Materialdichte der gängigen Kunststoffe ungenügend ist, sodass keine vollständige Lichtsperre erzielt wird. Da in der Regel auch noch eine bestimmte Materialelastizität erwünscht ist, werden bekannte Schutzelemente häufig aus Polyoxymethylen (POM) hergestellt. Um eine optimale Lichtsperre zu erzielen, ist man auch bereits dazu übergegangen, die Schutzelemente aus Metall herzustellen und/oder an der Oberfläche zu verspiegeln. Damit sind jedoch hohe Herstellungskosten verbunden und Schutzelemente aus Metall haben ausserdem den Nachteil, dass sie bei einem mechanischen Zusammenwirken mit anderen Bauteilen einen hohen Abrieb bewirken. Bei einer Verspiegelung muss stets darauf geachtet werden, dass kein reflektierendes Licht in den Lichtwellenleiter zurückgeworfen wird, was eine bestimmte geometrische Anordnung der Spiegelfläche bedingt.

Es ist daher eine Aufgabe der Erfindung, ein Schutzelement der eingangs genannten Art zu schaffen, das eine optimale Lichtsperre bildet, das sich kostengünstig und einfach herstellen lässt und das zudem optimale mechanische Eigenschaften aufweist. Diese Aufgabe wird mit einem Schutzelement gelöst, das die Merkmale im Anspruch 1 aufweist.

Das mit einem vorzugsweise schwarzen Füllstoff angereicherte Kunststoffmaterial absorbiert die Lichtstrahlen praktisch vollständig, sodass bereits bei einer geringen Wandstärke eine vollständige Lichtsperre erreicht wird. Aber auch das Reflektionsverhalten ist optimal, weil an der Oberfläche praktisch kein Licht zurückgeworfen wird. Der Füllstoff kann dem Kunststoffmaterial bereits als Rohstoff beigemischt werden und eine Verarbeitung ist daher mit den herkömmlichen Maschinen problemlos möglich.

Der Füllstoff besteht vorteilhaft aus Kohlenstoff, insbesondere aus Kohlenstofffasern. Kohlenstofffaserverstärkte Kunststoffe sind in der Technik bereits wegen ihren Festigkeitseigenschaften bekannt und gebräuchlich. Anstelle von Fasern könnte der Kohlenstoff auch in Kugelform beigemischt werden. Aber auch andere schwarze Füllstoffe wie z.B. Schwarzpigmente in der Form von Pigmentruss oder Anilinschwarz wären theoretisch denkbar. Der Füllstoff muss auch nicht zwingend schwarz sein, da je nach Anwendungsfall auch mit anderen Füllstoffen oder Mischungen von Füllstoffen gute Resultate erzielt werden können.

Als besonders vorteilhaft hat sich ein Kunststoffmaterial aus einem Polyphenylensulfid (PPS) erwiesen, das neben dem Kohlenstoff als Füllstoff einen Anteil von Polytetrafluorethylen (PTFE) aufweist. Der Kohlenstoff kann dabei einen Volumenanteil von 25 bis 35% und das Polytetrafluorethylen einen solchen von 10 bis 20% ausmachen. Als besonders vorteilhaft hat sich ein PPS-Kunststoffmaterial mit 30% Kohlenstofffasern und 15% PTFE erwiesen (PPS 30% CF, 15% PTFE). Das PTFE-Material verursacht dabei besonders gute Gleiteigenschaften, was bei mechanisch bewegten Schutzklappen besonders erwünscht ist. Dieser Werkstoff ist beispielsweise erhältlich bei RTP Company, Winona, MN 55987, USA.

Weitere Einzelmerkmale und Vorteile der Erfindung ergeben sich aus der nachfolgenden Beschreibung von Ausführungsbeispielen und aus den Zeichnungen. Es zeigen:
- Figur 1: eine perspektivische Darstellung einer optischen Steckverbindung mit zwei Steckerteilen und einem Buchsenteil,
- Figur 2: einen Querschnitt durch ein Steckerteil gemäss Figur 1 und
- Figur 3: eine Draufsicht auf ein Steckerteil mit separater Schutzkappe.

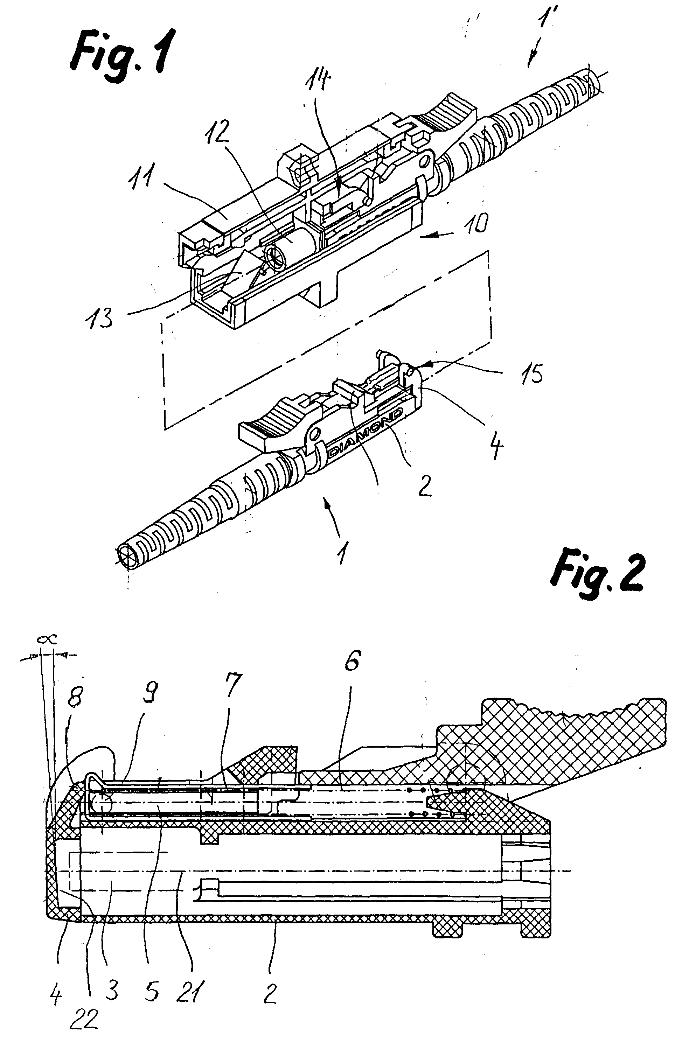

Figur 1 zeigt eine Steckverbindung bestehend aus den beiden Steckerteilen 1, 1' und aus einem Buchsenteil 10. Die Stekkerteile haben ein Steckergehäuse 2, in welchem ein Steckerstift 3 und in diesem wiederum ein Lichtwellenleiter gehalten ist. Als Schutzelement ist an der Stirnseite des Steckergehäuses eine Schutzklappe 4 gelenkig und verschiebbar gelagert. Dazu verfügt die Schutzklappe über innenliegende Gelenknocken 9, welche in einer Führungsbahn 5 am Steckergehäuse eingreifen.

Der Lichtwellenleiter verläuft auf einer optischen Achse 21 auf der an der Stirnseite des Steckerstifts 3 Licht austritt. Die Innenwand 22 der Schutzklappe verläuft unter einem Winkel a, der zu einer senkrecht durch die optische Achse verlaufenden Ebene geneigt ist. Dadurch ist gewährleistet, dass an der Oberfläche reflektiertes Restlicht nicht auf die Lichtaustrittsfläche zurückgeworfen wird.

Der ausgesteckte Stecker wird durch eine Druckfeder 6 in eine Schliessstellung 15 vorgespannt. Zu diesem Zweck greift ein Stössel 7 an einem Hebelarm 8 an, um ein Schliessdrehmoment um die Achse des Gelenknockens 9 zu erzeugen.

Beim Einstecken des Steckerteils 1 in das Buchsenteil 10 wird die Schutzklappe 4 gegen die Schliesskraft der Druckfeder 6 durch hier nicht näher beschriebene Mittel aufgeschwenkt und zurückgeschoben, bis sie die Öffnungsstellung 14 erreicht hat.

Das Buchsenteil 10 hat ein Buchsengehäuse 11, in welchem die eigentliche Steckerbuchse 12 angeordnet ist. Diese sorgt dafür, dass die Steckerstifte von beidseitig eingesteckten Stecker aufeinander zentriert werden. Damit bei einem einseitig ausgesteckten Stecker kein Licht aus dem Buchsenteil austreten kann, ist auf jeder Seite der Buchse 12 eine federnde Blende angeordnet, welche beim Einstecken eines Stekkers niedergedrückt wird. Bei dieser Blende handelt es sich ebenfalls um ein Schutzelement, das möglichst alle Lichtstrahlen absorbieren sollte.

Die Steckverbindung gemäss den Figur 1 und 2 ist in der Eingangs erwähnten EP-A-823 649 ausführlicher beschrieben. Die Schutzklappe 4 und gegebenenfalls auch die Blende 13 bestehen aus einem Kohlefaser verstärkten Kunststoffmaterial der Gattung PPS. Durch einen Anteil an PTFE-Material werden die Gleiteigenschaften erheblich verbessert, was sich besonders an den Reibflächen am Hebelarm 8 und am Gelenknocken 9 auswirkt. Die Wirkung als Lichtsperre bei einem Anteil von 30% Kohlenstofffasern ist praktisch gleich wie bei einer Schutzklappe aus Metall. Durch eine besondere Gestaltung der Innenseite der Schutzklappe (Oberflächenrauhheit, Schräglage usw.) kann erreicht werden, dass reflektiertes Restlicht nicht in den Lichtwellenleiter zurückstrahlt, sondern seitlich abgelenkt wird.

In einer Versuchsanordnung wurde je eine Schutzklappe gemäss Figur 2 aus POM bzw. aus karbonfaserverstärktem PPS mit Licht beaufschlagt. Die Wellenlänge betrug 1550 nm und die Lichleistung 0,5 mW. Bei identischen Abmessungen hat die POM Schutzklappe mehr als 80% Licht durchgelassen, während die PPS Karbonfaserschutzklappe auch bei 250 mW noch kein Licht durchgelassen hat.

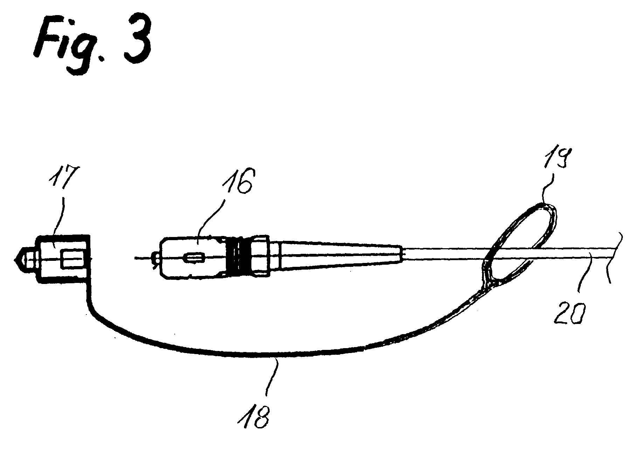

Figur 3 zeigt einen Stecker 16, der nicht mit einer integrierten Schutzklappe ausgerüstet ist. Im ausgesteckten Zustand kann eine Schutzkappe 17 auf die Steckerstirnseite aufgesteckt werden. Diese ist einstückig mit einem Halteband 18 versehen, an dessen Ende eine Schlaufe 19 angeordnet ist. Das Lichtwellenleiterkabel 20 ist durch diese Schlaufe geführt, sodass die Schutzkappe 17 bei eingestecktem Stecker unverlierbar am Kabel gehalten ist. Auch diese Schutzkappe besteht aus Kunststoffmaterial, das mit einem vorzugsweise schwarzen Füllstoff angereichert ist. Besonders gute Gleiteigenschaften sind hier aber eher unerwünscht, weil die Schutzkappe im aufgesteckten Zustand einen sicheren Halt haben soll.

## Patentansprüche

1. Schutzelement zum Abdecken der Lichtaustrittsfläche an einem optischen Bauteil, insbesondere an einem optischen Stecker, bestehend aus einem Kunststoffmaterial, dadurch gekennzeichnet, dass das Kunststoffmaterial mit einem die Strahlung absorbierenden vorzugsweise schwarzen Füllstoff angereichert ist.

2. Schutzelement nach Anspruch 1, dadurch gekennzeichnet, dass der Füllstoff aus Kohlenstoff, insbesondere aus Kohlenstofffasern besteht.

3. Schutzelement nach Anspruch 2, dadurch gekennzeichnet, dass das Kunststoffmaterial ein Polyphenylensulfid (PPS) mit einem Anteil Polytetrafluorethylen (PTFE) ist.

4. Schutzelement nach Anspruch 3, dadurch gekennzeichnet, dass das Kunststoffmaterial einen Volumenanteil von 25 bis 35% Kohlenstofffasern und von 10 bis 20% Polytetrafluorethylen aufweist.

5. Schutzelement nach einem der Ansprüche 1 bis 4, dadurch gekennzeichnet, dass die der Lichtaustrittsfläche zugewandte Innenwand (22) unter einem Winkel verläuft, der zu einer senkrecht durch die optische Achse (21) verlaufenden Ebene geneigt ist.

6. Optischer Stecker mit einem Steckergehäuse, in dem wenigstens ein Lichtwellenleiter gehalten ist und mit einer Schutzklappe (4) zum Abdecken der Stirnseite des Lichtwellenleiters, wobei die Schutzklappe zwischen einer Öffnungsstellung (14) und einer Schliessstellung (15) beweglich am Steckergehäuse (2) gelagert ist und ein Schutzelement nach einem der Ansprüche 1 bis 5 bildet.

7. Stecker nach Anspruch 6, dadurch gekennzeichnet, dass die Schutzklappe (4) schwenkbar und/oder verschiebbar am Steckergehäuse (2) gelagert ist und unter Federvorspannung in die Schliessstellung vorgespannt ist.
